# EUROPEAN PATENT APPLICATION

(11) **EP 4 819 242 A1**
(43) Date of publication of application: **07.10.2026**
(21) Application number: 24895880.3
(22) Date of filing: 06.09.2024
(51) Int. Cl.: H01M 4/58, H01M 4/62, H01M 10/054, C01B 25/45

(54) **POSITIVE ELECTRODE ACTIVE MATERIAL, PREPARATION METHOD THEREFOR, SODIUM ION BATTERY AND ELECTRICAL DEVICE**

(30) Priority: 30.11.2023 CN 202311638513
(71) Applicant: BYD Company Limited, Shenzhen, Guangdong 518118 (CN)
(72) Inventor: YIN, Xiaoqiang, Shenzhen, Guangdong 518118 (CN); ZHANG, Yadong, Shenzhen, Guangdong 518118 (CN); JIN, Lina, Shenzhen, Guangdong 518118 (CN); LI, Xiangyu, Shenzhen, Guangdong 518118 (CN)
(74) Representative: Mathys & Squire
(86) International application number: PCT/CN2024/117578
(87) International publication number: WO 2025/112781

(57) **Abstract**

A positive electrode active material, a preparation method therefor, a sodium-ion battery and an electrical device. The positive electrode active material has the following general formula: NaₓM_{y}(P_{1-w}A_{w}O₄)_{z}(P₂₋ᵤAᵤO₇), wherein M is one or more selected from Fe, Ti, V, Cr, Mn, Mg, Ca, Zr, Cd, Co, Ni, Cu, Zn and Nb; A is one or more selected from Ga, Sb, Se, Te, Bi and In; x satisfies the condition 2≤x≤4, and y satisties the condition 1≤y≤4; z satisfies the condition 0≤z≤2; w satisfies the condition 0 <w≤0.25; u satisfies the condition 0≤u<0.2: and u and z cannot be 0 at the same time

## Description

### PRIORITY INFORMATION AND CROSS REFERENCE

This application claims priority to Chinese Patent Application No. 202311638513.0, filed with the China National Intellectual Property Administration on November 30, 2023 and entitled "POSITIVE ELECTRODE ACTIVE MATERIAL AND PREPARATION METHOD THEREFOR, SODIUM-ION BATTERY, AND ELECTRICAL DEVICE", the entire content of which is incorporated herein by reference.

### TECHNICAL FIELD

The present disclosure relates to the field of positive electrode active materials for sodium-ion batteries, and specifically, to a positive electrode active material and a preparation method therefor, a sodium-ion battery, and an electrical device.

### BACKGROUND

Sodium-ion batteries are similar to current widely used lithium-ion batteries in many aspects. Both are reusable secondary batteries including an anode (a negative electrode), a cathode (a positive electrode), and an electrolyte material, and both can store energy, and are charged and discharged via similar reaction mechanisms.

In contrast, sodium-ion battery technologies are still in a relatively early stage, but are considered to be beneficial. Compared with lithium, sodium has more abundant reserves. However, in related art, a positive electrode active material of a sodium battery has a low potential, and it is difficult for a polyanionic positive electrode material to achieve a level close to theoretical capacity. For example, sodium ferric pyrophosphate (Na₄Fe₃(PO₄)₂P₂O₇) has a theoretical capacity of 129 mAh/g, but achieves only a level around 70 in practice. This is mainly because electronic conductivity is low and ion migration is slow. Therefore, it is important to adjust the polyanionic positive electrode material to modify capacity, voltage, and rate of the material.

### SUMMARY

A first aspect of the present disclosure provides a positive electrode active material. The positive electrode active material has the following general formula: NaₓM_{y}(P_{1-w}A_{w}O₄)_{z}(P₂₋ᵤAᵤO₇). M is selected from one or more of Fe, Ti, V, Cr, Mn, Mg, Ca, Zr, Cd, Co, Ni, Cu, Zn, and Nb; A is selected from one or more of Ga, Sb, Se, Te, Bi, and In; x satisfies a condition 2≤x≤4; y satisfies a condition 1≤y≤4; z satisfies a condition 0≤z≤2; w satisfies a condition 0<w≤0.25; and u satisfies a condition 0≤u≤0.2. u and z cannot be 0 at the same time.

A second aspect of the present disclosure provides a preparation method for a positive electrode active material, including:
(1) a metal M source material, a metal A source material, a sodium source, a phosphorus source, and a reducing agent are mixed to obtain a precursor solution.
(2) the precursor solution is sintered to obtain the positive electrode active material.

M is selected from one or more of Fe, Ti, V, Cr, Mn, Mg, Ca, Zr, Cd, Co, Ni, Cu, Zn, and Nb, and A is selected from one or more of Ga, Sb, Se, Te, Bi, and In.

A third aspect of the present disclosure provides a sodium-ion battery. The sodium-ion battery includes the positive electrode active material described above or a positive electrode active material obtained using the preparation method described above.

A fourth aspect of the present disclosure provides an electrical device, which includes the sodium-ion battery described above.

### BRIEF DESCRIPTION OF DRAWINGS

FIG. 1a and FIG. 1b show discharge voltage curves according to Comparative Example 1 and Examples 1 to 7, FIG. 1a shows discharge voltage curves according to Examples 1 to 3, and FIG. 1b shows discharge voltage curves according to Examples 4 to 7;
FIG. 2 shows discharge voltage curves according to Comparative Example 2 and Examples 8 to 11;
FIG. 3 shows discharge voltage curves according to Comparative Example 3 and Examples 12 and 13;
FIG. 4 shows rate performance results according to Comparative Example 1 and Examples 2, 4, 6, and 7;
FIG. 5 shows rate performance results according to Comparative Example 2 and Examples 8, 9, 10, and 11;
FIG. 6 shows rate performance results according to Comparative Example 3 and Examples 12 and 13; and
FIG. 7a is an XRD pattern of a positive electrode active material according to Example 1, FIG. 7b is an XRD pattern of a positive electrode active material according to Example 24, and FIG. 7c is an XRD pattern of a positive electrode active material according to Example 28.

### DESCRIPTION OF EMBODIMENTS

Endpoints of ranges and any values disclosed in this specification are not limited to the exact ranges or values. It will be understood that these ranges or values include values close to these ranges or values. For numerical ranges, endpoint values of ranges, endpoint values of ranges and individual point values, and individual point values can be combined with each other to obtain one or more new numerical ranges, and these numerical ranges shall be considered to be specifically disclosed in this specification.

A first aspect of the present disclosure provides a positive electrode active material. The positive electrode active material has the following general formula: NaₓM_{y}(P_{1-w}A_{w}O₄)_{z}(P₂₋ᵤAᵤO₇). M is selected from one or more of Fe, Ti, V, Cr, Mn, Mg, Ca, Zr, Cd, Co, Ni, Cu, Zn, and Nb; A is selected from one or more of Ga, Sb, Se, Te, Bi, and In; x satisfies a condition 2≤x≤4; y satisfies a condition 1≤y≤4; z satisfies a condition 0≤z≤2; w satisfies a condition 0<w≤0.25; and u satisfies a condition 0≤u≤0.2. u and z cannot be 0 at the same time. A molecular formula of the positive electrode active material is determined according to an elemental quantitative analysis-ICP method. An ICP-OES (inductively coupled plasma optical emission spectrometer) is used, and the molecular formula of the positive electrode active material is finally obtained with reference to XRD.

In the present disclosure, according to first principles, simulations show that an A-O distance is 1.7 to 2 Å, and an M-O distance is 1.95 to 2.25 Å in a unit cell of the positive electrode active material. Performance is adjusted through co-doping of transition metal at position M and metal A at position P, increasing a volume of the unit cell and a bond length. This change can lower Na ion diffusion barriers and improve ionic conductivity.

In the present disclosure, the performance is mainly adjusted through co-doping of transition metal at position M and metal A at position P, which can make full use of advantages of different elements and enhance performance of the polyanionic positive electrode material. For example, one or more of Ga, Ge, Sb, Se, Te, Bi, and In in metal A have a larger size than P. After one or more of Ga, Ge, Sb, Se, Te, Bi, and In in metal A are doped into the unit cell, the volume and the A-O distance change, and the A-O distance of the unit cell is 1.7 to 2 Å. Finally, it is found that the volume of the unit cell and the bond length increase. This change can lower the Na ion diffusion barrier and improve ionic conductivity. It is preliminarily proved that doping of large-sized anions has the potential to improve electrochemical performance of the polyanionic material.

In some specific implementations of the present disclosure, the positive electrode active material in the present disclosure is a polyanionic compound. The polyanionic compound is usually formed by connecting MO₆ octahedrons and PO₄ tetrahedrons through common points, common edges, and common surfaces to form a Na⁺ three-dimensional diffusion channel. A three-dimensional framework allows Na⁺ to have a relatively small volume change during intercalation/deintercalation, resulting in a large cycle count. First, metal A (Ga, Ge, Sb, Se, Te, Bi, In) is doped into a polyanionic unit cell, with an A-O distance being 1.7 to 2 Å, and a P-O distance before doping being 1.5 to 1.62 Å. An increased volume of the unit cell leads to faster Na ion migration, thereby improving actual capacity and rate performance. In addition, doping of Mn at position M increases a voltage, and doping of Ti improves electronic conductivity.

In some specific implementations of the present disclosure, M is selected from one or more of Ti, Mn, Fe, Mg, and Ca, and A is selected from one or more of Ga, Bi, and Se. When M is selected from Mn, Mn improves voltage performance; when M is selected from Ti, Ti improves electronic conductivity; or when M is selected from Mg and Ca, cycle performance and processing performance can be improved.

In some specific implementations of the present disclosure, M contains at least Fe and Mg or contains at least Fe and Ca, and A is selected from Ga and/or Se; and preferably, in M, a molar ratio of Fe to Mg is 2.9-3:0.001-0.02, or a molar ratio of Fe to Ca is 2.9-3:0.001-0.02.

In some specific implementations of the present disclosure, in M, a molar ratio of Fe to Mg is 2.9-3:0.001-0.02, or a molar ratio of Fe to Ca is 2.9-3:0.001-0.02.

In some specific implementations of the present disclosure, the positive electrode active material has the following general formula: NaₓM_{y}(P_{1-w}A_{w}O₄)_{z}(P₂O₇), where x=4, y=3, z=2, and 0<w≤0.25. The positive electrode active material within the above range is, for example, doped Na₄Fe₃(PO₄)₂P₂O₇.

In some specific implementations of the present disclosure, preferably, the positive electrode active material has the following general formula: NaₓM_{y}(P₂₋ᵤAᵤO₇), where x=2, y=1, and 0≤u≤0.25. The positive electrode active material within the above range is, for example, doped Na₂FeP₂O₇.

In some specific implementations of the present disclosure, preferably, the positive electrode active material has the following general formula: NaₓM_{y}(P_{1-w}A_{w}O₄)_{z}(P₂O₇), where x=3, y=2, z=1, and 0<w≤0.25. The positive electrode active material within the above range is, for example, doped Na₃Fe₂(PO₄)P₂O₇.

In some specific implementations of the present disclosure, performance of the positive electrode active material satisfies at least one of the following conditions: electronic conductivity is 1×10⁻⁸ to 6×10⁻⁷ S/cm, a capacity retention ratio after 1200 cycles at 1C is 82% to 97%, and a first-cycle discharge specific capacity at 0.1C is 82 to 93 mAh/g.

A second aspect of the present disclosure provides a preparation method for a positive electrode active material, including:
(1) a metal M source material, a metal A source material, a sodium source, a phosphorus source, and a reducing agent are mixed to obtain a precursor solution.
(2) the precursor solution is sintered to obtain the positive electrode active material.

M is selected from one or more of Fe, Ti, V, Cr, Mn, Mg, Ca, Zr, Cd, Co, Ni, Cu, Zn, and Nb, and A is selected from one or more of Ga, Sb, Se, Te, Bi, and In.

In some specific implementations of the present disclosure, a metal M source material, a metal A source material, a sodium source, a phosphorus source, and a reducing agent are mixed and dissolved in water to obtain a precursor solution.

In some specific implementations of the present disclosure, the sintering specifically comprises: granulating and sintering the precursor solution to obtain the positive electrode active material, where the granulating may be spray granulation.

In some specific implementations of the present disclosure, the metal M source material is selected from one or more of metal nitrate, metal oxalate, and metal citrate.

In some specific implementations of the present disclosure, the metal A source material is selected from one or more of metal nitrate, metal oxalate, and metal citrate.

In some specific implementations of the present disclosure, the sodium source is selected from one or more of sodium carbonate, sodium dihydrogen phosphate, sodium acetate, and sodium nitrate.

In some specific implementations of the present disclosure, the phosphorus source is selected from ammonium dihydrogen phosphate and/or etidronic acid.

In some specific implementations of the present disclosure, the reducing agent is selected from one or more of oxalic acid, citric acid, ascorbic acid, and tartaric acid. In addition to a reducing action, the reducing agent also acts as a carbon source and stabilizes metal ions; and acts as a chelating agent for combination with ferrous ions to form a chelate, thereby stabilizing metal M ions. In a final calcination process under an inert atmosphere, ascorbic acid forms in-situ carbon that uniformly coats a surface of the material, greatly improving an electrical conductivity of the material.

In some specific implementations of the present disclosure, a temperature of the sintering is 400 to 650°C and time of the sintering is 10 to 36 h.

In some specific implementations of the present disclosure, pre-sintering is further performed before the sintering, where a pre-sintering temperature is 260 to 330°C, and pre-sintering time is 1 to 5 h.

In some specific implementations of the present disclosure, the pre-sintering is performed in a hydrogen-argon gas mixture, where a volume percent content of hydrogen in the hydrogen-argon gas mixture may be 1% to 10%.

In some specific implementations of the present disclosure, a molar ratio of the metal M source material, the metal A source material, the sodium source, the phosphorus source, and the reducing agent is (0.01-0.1):(0.0001-0.1):(0.01-0.1):(0.01-0.1):(0.01-0.1).

In the present disclosure, the composition and structure of the positive electrode active material may be determined through nuclear magnetic resonance, infrared spectroscopy, XRD, or elemental analysis, or the like, or determined through preparation and feeding.

A third aspect of the present disclosure provides a sodium-ion battery. The sodium-ion battery includes the positive electrode active material described above or a positive electrode active material obtained using the preparation method described above.

A fourth aspect of the present disclosure provides an electrical device, which includes the sodium-ion battery described above.

The present disclosure is described in detail below by using examples.

The structural composition of the positive electrode active material in the examples of the present disclosure is determined according to an elemental quantitative analysis-ICP method. An appropriate amount of powder is taken, and dissolved in strong acid, and proportions of different elements are represented using an ICP-OES (inductively coupled plasma optical emission spectrometer). Finally, a molecular formula of the positive electrode active material is obtained with reference to XRD.

Unless otherwise specified in the following examples and comparative examples, normal conditions or conditions recommended by the manufacturer are used. The reagents or instruments used without a specified manufacturer are all conventional products that can be purchased from the market.

### Example 1

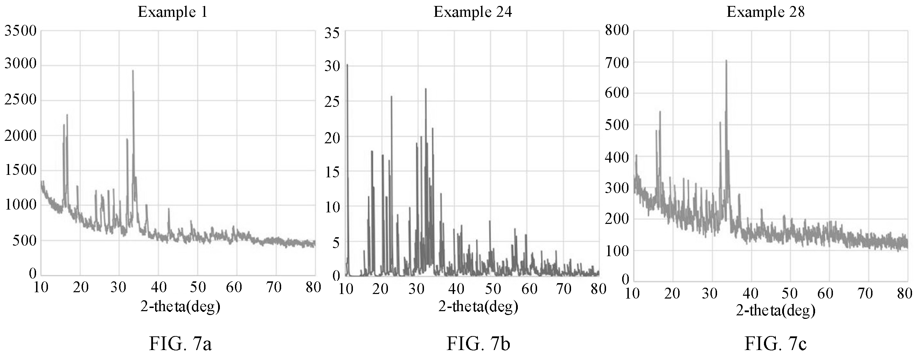

0.02978 mol of ferric nitrate, 0.0002 mol of zirconium nitrate, and 0.00002 mol of magnesium nitrate are dissolved in 600 mL of deionized water. Then, 0.10 mol of ascorbic acid is added, stirring is performed magnetically, and then 0.0399 mol of ammonium dihydrogen phosphate, 0.0001 mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe_{2.978}Zr_{0.02}Mg_{0.002}(P_{0.995}Ga_{0.005}O₄)₂P₂O₇. XRD analysis is performed for Example 1, and an analysis result is shown in FIG. 7a.

### Example 2

0.02978 mol of ferric nitrate, 0.0002 mol of cadmium nitrate, and 0.00002 mol of magnesium nitrate are dissolved in 600 mL of deionized water. Then, 0.10 mol of ascorbic acid is added, stirring is performed magnetically, and then 0.0399 mol of ammonium dihydrogen phosphate, 0.0001 mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na4Fe2.978Cd0.02Mg0.002(P0.995Ga0.005O4)2P2O7.

### Example 3

0.02978 mol of ferric nitrate, 0.0002 mol of zirconium nitrate, and 0.00002 mol of magnesium nitrate are dissolved in 600 mL of deionized water. Then, 0.10 mol of ascorbic acid is added, stirring is performed magnetically, and then 0.0399 mol of ammonium dihydrogen phosphate, 0.0001 mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na4Fe2.978Cr0.02Mg0.002(P0.995Ga0.005O4)2P2O7.

### Example 4

0.0296 mol of ferric nitrate, 0.0002 mol of nickel nitrate, and 0.0002 mol of magnesium nitrate are dissolved in 600 mL of deionized water. Then, 0.10 mol of ascorbic acid is added, stirring is performed magnetically, and then 0.0399 mol of ammonium dihydrogen phosphate, 0.0001 mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na4Fe2.960Ni0.02Mg0.02(P0.995Ga0.005O4)2P2O7.

### Example 5

0.0296 mol of ferric nitrate, 0.0002 mol of zirconium nitrate, and 0.0002 mol of magnesium nitrate are dissolved in 600 mL of deionized water. Then, 0.10 mol of ascorbic acid is added, stirring is performed magnetically, and then 0.0399 mol of ammonium dihydrogen phosphate, 0.0001 mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na4Fe2.960Zr0.02Mg0.02(P0.995Ga0.005O4)2P2O7.

### Example 6

0.0296 mol of ferric nitrate, 0.0002 mol of manganese nitrate, and 0.0002 mol of magnesium nitrate are dissolved in 600 mL of deionized water. Then, 0.10 mol of ascorbic acid is added, stirring is performed magnetically, and then 0.0398 mol of ammonium dihydrogen phosphate, 0.0002mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na4Fe2.960Mn0.02Mg0.02(P0.99Ga0.01O4)2P2O7.

### Example 7

0.0296 mol of ferric nitrate, 0.0002 mol of cadmium nitrate, and 0.0002 mol of calcium nitrate are dissolved in 600 mL of deionized water. Then, 0.10 mol of ascorbic acid is added, stirring is performed magnetically, and then 0.0398 mol of ammonium dihydrogen phosphate, 0.0002mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na4Fe2.960Cd0.02Ca0.02(P0.99Ga0.01O4)2P2O7.

### Example 8

0.0296 mol of ferric nitrate, 0.0002 mol of manganese nitrate, and 0.0002 mol of calcium nitrate are dissolved in 600 mL of deionized water. Then, 0.10 mol of ascorbic acid is added, stirring is performed magnetically, and then 0.0398 mol of ammonium dihydrogen phosphate, 0.0002mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na4Fe2.960Mn0.02Ca0.02(P0.99Ga0.01O4)2P2O7.

### Example 9

0.0296 mol of ferric nitrate, 0.0002 mol of copper nitrate, and 0.0002 mol of calcium nitrate are dissolved in 600 mL of deionized water. Then, 0.10 mol of ascorbic acid is added, stirring is performed magnetically, and then 0.0398 mol of ammonium dihydrogen phosphate, 0.0002mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na4Fe2.960Cu0.02Ca0.02(P0.99Ga0.01O4)2P2O7.

### Example 10

0.0296 mol of ferric nitrate, 0.0002 mol of nickel nitrate, and 0.0002 mol of calcium nitrate are dissolved in 600 mL of deionized water. Then, 0.10 mol of ascorbic acid is added, stirring is performed magnetically, and then 0.0398 mol of ammonium dihydrogen phosphate, 0.0002mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na4Fe2.960Ni0.02Ca0.02(P0.99Ga0.01O4)2P2O7.

### Example 11

0.0296 mol of ferric nitrate, 0.0002 mol of zinc nitrate, and 0.0002 mol of calcium nitrate are dissolved in 600 mL of deionized water. Then, 0.10 mol of ascorbic acid is added, stirring is performed magnetically, and then 0.0398 mol of ammonium dihydrogen phosphate, 0.0002mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na4Fe2.960Zn0.02Ca0.02(P0.99Ga0.01O4)2P2O7.

### Example 12

0.02998 mol of ferric nitrate and 0.00002 mol of magnesium nitrate are dissolved in 600 mL of deionized water. Then, 0.10 mol of ascorbic acid is added, stirring is performed magnetically, and then 0.0399 mol of ammonium dihydrogen phosphate, 0.0001 mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe_{2.998}Mg_{0.002}(P_{0.995}Ga_{0.005}O₄)₂P₂O₇.

### Example 13

0.02995 mol of ferric nitrate and 0.00005 mol of calcium nitrate are dissolved in 600 mL of deionized water. Then, 0.10 mol of ascorbic acid is added, stirring is performed magnetically, and then 0.0399 mol of ammonium dihydrogen phosphate, 0.0001 mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe_{2.995}Ca_{0.005}(P_{0.995}Ga_{0.005}O₄)₂P₂O₇.

### Example 14

0.02998 mol of ferric nitrate and 0.00002 mol of magnesium nitrate are dissolved in 600 mL of deionized water. Then, 0.10 mol of ascorbic acid is added, stirring is performed magnetically, and then 0.0399 mol of ammonium dihydrogen phosphate, 0.0001 mol of germanate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe_{2.998}Mg_{0.002}(P_{0.995}Ge_{0.005}O₄)₂P₂O₇.

### Example 15

0.0298 mol of ferric nitrate and 0.0002 mol of cadmium nitrate are dissolved in 600 mL of deionized water. Then, 0.10 mol of ascorbic acid is added, stirring is performed magnetically, and then 0.0399 mol of ammonium dihydrogen phosphate, 0.0001 mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe_{2.98}Cd_{0.02}(P_{0.995}Ga_{0.005}O₄)₂P₂O₇.

### Example 16

0.0298 mol of ferric nitrate and 0.0002 mol of cadmium nitrate are dissolved in 600 mL of deionized water. Then, 0.10 mol of ascorbic acid is added, stirring is performed magnetically, and then 0.0398 mol of ammonium dihydrogen phosphate, 0.0002 mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe_{2.98}Cd_{0.02}(P_{0.99}Ga_{0.01}O₄)₂P₂O₇.

### Example 17

0.015 mol of ferric nitrate and 0.015 mol of manganese nitrate are dissolved in 600 mL of deionized water. Then, 0.10 mol of ascorbic acid is added, stirring is performed magnetically, and then 0.036 mol of ammonium dihydrogen phosphate, 0.004 mol of selenate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe_{1.5}Mn_{1.5}(P_{0.8}Se_{0.2}O₄)₂P₂O₇.

### Example 18

0.015 mol of ferric nitrate and 0.015 mol of manganese nitrate are dissolved in 600 mL of deionized water. Then, 0.10 mol of ascorbic acid is added, stirring is performed magnetically, and then 0.038 mol of ammonium dihydrogen phosphate, 0.002 mol of selenate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe_{1.5}Mn_{1.5}(P_{0.9}Se_{0.1}O₄)₂P₂O₇.

### Example 19

0.02 mol of ferric nitrate and 0.01 mol of manganese nitrate are dissolved in 600 mL of deionized water. Then, 0.10 mol of ascorbic acid is added, stirring is performed magnetically, and then 0.038 mol of ammonium dihydrogen phosphate, 0.002 mol of selenate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe₂Mn₁(P_{0.9}Se_{0.1}O₄)₂P₂O₇.

### Example 20

0.015 mol of ferric nitrate and 0.015 mol of manganese nitrate are dissolved in 600 mL of deionized water. Then, 0.10 mol of ascorbic acid is added, stirring is performed magnetically, and then 0.038 mol of ammonium dihydrogen phosphate, 0.002 mol of bismuthate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe_{1.5}Mn_{1.5}(P_{0.9}Bi_{0.1}O₄)₂P₂O₇.

### Example 21

0.015 mol of ferric nitrate and 0.015 mol of manganese nitrate are dissolved in 600 mL of deionized water. Then, 0.10 mol of ascorbic acid is added, stirring is performed magnetically, and then 0.038 mol of ammonium dihydrogen phosphate, 0.002 mol of gallate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe_{1.5}Mn_{1.5}(P_{0.9}Ga_{0.1}O₄)₂P₂O₇.

### Example 22

0.015 mol of ferric nitrate and 0.015 mol of titanium nitrate are dissolved in 600 mL of deionized water. Then, 0.10 mol of ascorbic acid is added, stirring is performed magnetically, and then 0.038 mol of ammonium dihydrogen phosphate, 0.002 mol of selenate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe_{1.5}Ti_{1.5}(P_{0.9}Se_{0.1}O₄)₂P₂O₇.

### Example 23

0.015 mol of ferric nitrate and 0.015 mol of titanium nitrate are dissolved in 600 mL of deionized water. Then, 0.10 mol of ascorbic acid is added, stirring is performed magnetically, and then 0.036 mol of ammonium dihydrogen phosphate, 0.004 mol of bismuthate, and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe_{1.5}Ti_{1.5}(P_{0.8}Bi_{0.2}O₄)₂P₂O₇.

### Example 24

0.02 mol of ferric nitrate nonahydrate and 0.02 mol of manganese nitrate are dissolved in 700 mL of deionized water. Then, 0.12 mol of ascorbic acid is added, stirring is performed magnetically, and then 0.076 mol of etidronic acid, 0.004 mol of selenate, and 0.08 mol of sodium nitrate are slowly added. After stirring for 1 h, the reaction solution is transferred to a spray dryer for spray granulation. Sprayed powder is pre-calcined for 4 h under a hydrogen-argon gas mixture (5%) at a temperature controlled at 300°C. Then, sintering is performed at 600°C for 20 h to obtain carbon-encapsulated Na₂Fe_{0.5}Mn_{0.5}P_{1.9}Se_{0.1}O₇. XRD analysis is performed for Example 24, and an analysis result is shown in FIG. 7b.

### Example 25

0.02 mol of ferric nitrate nonahydrate and 0.02 mol of manganese nitrate are dissolved in 700 mL of deionized water. Then, 0.12 mol of ascorbic acid is added, stirring is performed magnetically, and then 0.076 mol of etidronic acid, 0.004 mol of bismuthate, and 0.08 mol of sodium nitrate are slowly added. After stirring for 1 h, the reaction solution is transferred to a spray dryer for spray granulation. Sprayed powder is pre-calcined for 4 h under a hydrogen-argon gas mixture (5%) at a temperature controlled at 300°C. Then, sintering is performed at 600°C for 20 h to obtain carbon-encapsulated Na₂Fe_{0.5}Mn_{0.5}P_{1.9}Bi_{0.1}O₇.

### Example 26

0.02 mol of ferric nitrate nonahydrate and 0.02 mol of titanium nitrate are dissolved in 700 mL of deionized water. Then, 0.12 mol of ascorbic acid is added, stirring is performed magnetically, and then 0.076 mol of etidronic acid, 0.004 mol of selenate, and 0.08 mol of sodium nitrate are slowly added. After stirring for 1 h, the reaction solution is transferred to a spray dryer for spray granulation. Sprayed powder is pre-calcined for 4 h under a hydrogen-argon gas mixture (5%) at a temperature controlled at 300°C. Then, sintering is performed at 600°C for 20 h to obtain carbon-encapsulated Na₂Fe_{0.5}Mn_{0.5}P_{1.9}Se_{0.1}O₇.

### Example 27

0.02 mol of ferric nitrate nonahydrate and 0.02 mol of manganese nitrate are dissolved in 700 mL of deionized water. Then, 0.12 mol of ascorbic acid is added, stirring is performed magnetically, and then 0.076 mol of etidronic acid, 0.004 mol of antimonate, and 0.08 mol of sodium nitrate are slowly added. After stirring for 1 h, the reaction solution is transferred to a spray dryer for spray granulation. Sprayed powder is pre-calcined for 4 h under a hydrogen-argon gas mixture (5%) at a temperature controlled at 300°C. Then, sintering is performed at 600°C for 20 h to obtain carbon-encapsulated Na₂Fe_{0.5}Mn_{0.5}P_{1.9}Sb_{0.1}O₇.

### Example 28

0.02 mol of ferric nitrate nonahydrate and 0.02 mol of manganese nitrate are dissolved in 700 mL of deionized water. Then, 0.12 mol of ascorbic acid is added, stirring is performed magnetically, and then 0.058 mol of ammonium dihydrogen phosphate, 0.002 mol of selenate, and 0.06 mol of sodium carbonate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 550°C for 20 h to obtain carbon-encapsulated Na₃FeMn(P_{0.9}Se_{0.1}O₄)P₂O₇. XRD analysis is performed for Example 28, and an analysis result is shown in FIG. 7c.

### Example 29

0.02 mol of ferric nitrate nonahydrate and 0.02 mol of titanium nitrate are dissolved in 700 mL of deionized water. Then, 0.12 mol of ascorbic acid is added, stirring is performed magnetically, and then 0.058 mol of ammonium dihydrogen phosphate, 0.002 mol of selenate, and 0.06 mol of sodium carbonate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 550°C for 20 h to obtain carbon-encapsulated Na₃FeTi(P_{0.9}Se_{0.1}O₄)P₂O₇.

### Comparative Example 1

0.03 mol of ferric nitrate nonahydrate is dissolved in 600 mL of deionized water. Then, 0.10 mol of ascorbic acid is added, stirring is performed magnetically, and then 0.04 mol of ammonium dihydrogen phosphate and 0.04 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 500°C for 36 h to obtain carbon-encapsulated Na₄Fe₃(PO₄)₂P₂O₇.

### Comparative Example 2

0.04 mol of ferric nitrate nonahydrate is dissolved in 700 mL of deionized water. Then, 0.12 mol of ascorbic acid is added, stirring is performed magnetically, and then 0.08 mol of ammonium dihydrogen phosphate and 0.08 mol of sodium acetate are slowly added. After stirring for 1 h, the reaction solution is transferred to a spray dryer for spray granulation. Sprayed powder is pre-calcined for 4 h under a hydrogen-argon gas mixture (5%) at a temperature controlled at 300°C. Then, sintering is performed at 600°C for 20 h to obtain carbon-encapsulated Na₂FeP₂O₇.

### Comparative Example 3

0.04 mol of ferric nitrate nonahydrate is dissolved in 700 mL of deionized water. Then, 0.12 mol of ascorbic acid is added, stirring is performed magnetically, and then 0.08 mol of ammonium dihydrogen phosphate and 0.06 mol of sodium acetate are slowly added. After stirring for 1 h, the reaction solution is transferred to a spray dryer for spray granulation. Sprayed powder is pre-calcined for 2 h under a hydrogen-argon gas mixture (5%) at a temperature controlled at 300°C. Then, sintering is performed at 550°C for 20 h to obtain carbon-encapsulated Na₃Fe₂(PO₄)P₂O₇.

Test Example 1: electronic conductivities, 1200-cycle capacity retention ratios, and first-cycle discharge specific capacities at 0.1C are measured for positive electrode active materials obtained in the examples and the comparative examples.

Electronic conductivity: the positive electrode active material is measured using a direct current four probe method.

1200-cycle capacity retention ratio: the positive electrode active materials obtained in the examples and the comparative examples are applied to sodium-ion batteries. After capacity measurement through charging and discharging at 0.2C, a discharge capacity is used as a rated capacity. A voltage range is 2 to 3.4 V. 1C cycling is used, with each step resting for 10 minutes. A constant-current and constant-voltage mode is used for charging, a cutoff current is 0.05C, and a constant-current mode is used for charging.

First-cycle discharge specific capacity at 0.1C: small soft packages are made through hand-folding, are charged at a rate of 0.1C to 3.5V for formation, and after aging for two days, are discharged at 0.1C to 2V for capacity grading.

Test results are shown in Table 1.

**Table 1**

| Number | Structural formula of a positive electrode material of a battery | Electronic conductivity (S/cm) | First-cycle discharge specific capacity at 0.1C (mAh/g) | 1200-cycle capacity retention ratio |
|---|---|---|---|---|
| Example 1 | Na₄Fe_{2.978}Zr_{0.02}Mg_{0.002}(P_{0.995}Ga_{0.005}O₄)₂P₂O₇ | 1.56×10⁻⁷ | 89.83 | 95.55% |
| Example 2 | Na₄Fe_{2.978}Cd_{0.02}Mg_{0.002}(P_{0.995}Ga_{0.005}O₄)₂P₂O₇ | 1.95×10⁻⁷ | 90.56 | 92.09% |
| Example 3 | Na₄Fe_{2.978}Cr_{0.02}Mg_{0.002}(P_{0.995}Ga_{0.005}O₄)₂P₂O₇ | 2.65×10⁻⁷ | 91.23 | 93.68% |
| Example 4 | Na₄Fe_{2.960}Ni_{0.02}Mg_{0.02}(P_{0.995}Ga_{0.005}O₄)₂P₂O₇ | 1.08×10⁻⁷ | 89.93 | 92.95% |
| Example 5 | Na₄Fe_{2.960}Zr_{0.02}Mg_{0.02}(P_{0.995}Ga_{0.005}O₄)₂P₂O₇ | 9.32×10⁻⁸ | 87.45 | 94.38% |
| Example 6 | Na₄Fe_{2.960}Mn_{0.02}Mg_{0.02}(P_{0.99}Ga_{0.01}O₄)₂P₂O₇ | 5.17×10⁻⁸ | 89.44 | 93.82% |
| Example 7 | Na₄Fe_{2.960}Cd_{0.02}Ca_{0.02}(P_{0.99}Ga_{0.01}O₄)₂P₂O₇ | 9.32×10⁻⁷ | 88.38 | 92.75% |
| Example 8 | Na₄Fe_{2.960}Mn_{0.02}Ca_{0.02}(P_{0.99}Ga_{0.01}O₄)₂P₂O₇ | 8.87×10⁻⁸ | 91.83 | 93.51% |
| Example 9 | Na₄Fe_{2.960}Cu_{0.02}Ca_{0.02}(P_{0.99}Ga_{0.01}O₄)₂P₂O₇ | 9.83×10⁻⁸ | 90.14 | 90.65% |
| Example 10 | Na₄Fe_{2.960}Ni_{0.02}Ca_{0.02}(P_{0.99}Ga_{0.01}O₄)₂P₂O₇ | 6.84×10⁻⁸ | 89.56 | 91.67% |
| Example 11 | Na₄Fe_{2.960}Zn_{0.02}Ca_{0.02}(P_{0.99}Ga_{0.01}O₄)₂P₂O₇ | 1.87×10⁻⁷ | 90.19 | 90.82% |
| Example 12 | Na₄Fe_{2.998}Mg_{0.002}(P_{0.995}Ga_{0.005}O₄)₂P₂O₇ | 4.61×10⁻⁷ | 87.22 | 93.67% |
| Example 13 | Na₄Fe_{2.995}Ca_{0.005}(P_{0.995}Ga_{0.005}O₄)₂P₂O₇ | 9.91×10⁻⁸ | 84.95 | 94.22% |
| Example 14 | Na₄Fe_{2.998}Mg_{0.002}(P_{0.995}Se_{0.005}O₄)₂P₂O₇ | 9.87×10⁻⁸ | 86.91 | 92.90% |
| Example 15 | Na₄Fe_{2.98}Cd_{0.02}(P_{0.995}Ga_{0.005}O₄)₂P₂O₇ | 6.95×10⁻⁸ | 87.91 | 88.69% |
| Example 16 | Na₄Fe_{2.98}Cd_{0.02}(P_{0.99}Ga_{0.01}O₄)₂P₂O₇ | 8.95×10⁻⁸ | 86.76 | 87.93% |
| Example 17 | Na₄Fe_{1.5}Mn_{1.5}(P_{0.8}Se_{0.2}O₄)₂P₂O₇ | 6.76×10⁻⁸ | 83.22 | 81.92% |
| Example 18 | Na₄Fe_{1.5}Mn_{1.5}(P_{0.9}Se_{0.1}O₄)₂P₂O₇ | 9.91×10⁻⁸ | 86.95 | 87.53% |
| Example 19 | Na₄Fe₂Mn₁(P_{0.9}Se_{0.1}O₄)₂P₂O₇ | 6.87×10⁻⁸ | 84.91 | 83.45% |
| Example 20 | Na₄Fe_{1.5}Mn_{1.5}(P_{0.9}Bi_{0.1}O₄)₂P₂O₇ | 4.16×10⁻⁸ | 83.92 | 83.32% |
| Example 21 | Na₄Fe_{1.5}Mn_{1.5}(P_{0.9}Ga_{0.1}O₄)₂P₂O₇ | 5.58×10⁻⁸ | 85.99 | 89.92% |
| Example 22 | Na₄Fe_{1.5}Ti_{1.5}(P_{0.9}Se_{0.1}O₄)₂P₂O₇ | 10.56×10⁻⁸ | 86.75 | 88.78% |
| Example 23 | Na₄Fe_{1.5}Ti_{1.5}(P_{0.8}Bi_{0.2}O₄)₂P₂O₇ | 6.45×10⁻⁸ | 83.11 | 83.19% |
| Example 24 | Na₂Fe_{0.5}Mn_{0.5}P_{1.9}Se_{0.1}O₇ | 1.56×10⁻⁸ | 88.91 | 87.14% |
| Example 25 | Na₂Fe_{0.5}Mn_{0.5}P_{1.9}Bi_{0.1}O₇ | 0.88×10⁻⁸ | 86.08 | 85.61% |
| Example 26 | Na₂Fe_{0.5}Ti_{0.5}P_{1.9} Se_{0.1}O₇ | 4.98×10⁻⁸ | 86.11 | 92.42% |
| Example 27 | Na₂Fe_{0.5}Mn_{0.5}P_{1.9}Sb_{0.1}O₇ | 2.12×10⁻⁸ | 82.25 | 82.05% |
| Example 28 | Na₃FeMn(P_{0.9}S_{e0.1}O₄)P₂O₇ | 7.45×10⁻⁸ | 64.14 | 86.05% |
| Example 29 | Na₃FeTi(P_{0.9}Se_{0.1}O₄)P₂O₇ | 11.69×10⁻⁹ | 61.00 | 86.14% |
| Comparative Example 1 | Na₄Fe₃(PO₄)₂P₂O₇ | 2.17×10⁻⁹ | 72.84 | 77.59% |
| Comparative Example 2 | Na₂FeP₂O₇ | 3.88×10⁻⁹ | 77.63 | 74.85% |
| Comparative Example 3 | Na₃Fe₂(PO₄)P₂O₇ | 9.80×10⁻⁹ | 53.81 | 66.98% |

It will be understood from the results in Table 1 that, for doping of the Na₄Fe₃(PO₄)₂P₂O₇ active material, through comparison between Examples 1 to 23 and Comparative Example 1, performance is adjusted through co-doping of metal M and metal A, double doping of anions and cations has a significant effect on cycle improvement, and effects of Examples 1 to 23 are better than that of Comparative Example 1. For the doping element M, Mg and Ca are superior to other elements, significantly improving the electronic conductivity, as shown by the results in Examples 1 to 11 and Examples 12 to 23. Specifically, comparison between Example 2 and Example 15 shows that double doping of cations of Mg and other elements leads to a better electronic conductivity, 1200-cycle capacity retention ratio, and first-cycle discharge specific capacity at 0.1C. Comparison between Example 7 and Example 16 shows that double doping of cations of Ca and other elements leads to a better electronic conductivity, 1200-cycle capacity retention ratio, and first-cycle discharge specific capacity at 0.1C.

For doping of the Na₂FeP₂O₇ active material, through comparison between Examples 24 to 27 and Comparative Example 2, performance is adjusted through co-doping of metal M and metal A, and effects of Examples 24 to 27 are better than that of Comparative Example 2.

For doping of the Na₃Fe₂(PO₄)P₂O₇ active material, through comparison between Examples 28 and 29 and Comparative Example 3, performance is adjusted through co-doping of metal M and metal A, and effects of Examples 28 and 29 are better than that of Comparative Example 3.

Test Example 2: discharge voltage and rate performance tests for the examples and the comparative examples.

Discharge voltage: a slurry is prepared by mixing positive electrode powder, a conductive agent, and a binder at a ratio of 100:4:2, coated on carbon-coated aluminum foil, baked, and then rolled into an electrode sheet, which is compacted to 1.9 g/cc. The electrode sheet is cut, weighed, and baked in vacuum at 120 degrees Celsius for one day to prepare a coin half-cell. A negative electrode is a hand-pressed sodium tablet. Electrochemical performance of a positive electrode material is evaluated, to obtain discharge voltage curves of different positive electrode materials.

Rate performance: 0.2C is uniformly used for charging, and a discharge rate is set to 0.1C\0.2C\0.5C\10C, with 5 cycles at each rate. Discharging at different rates can reflect an ion diffusion capability of a positive electrode material.

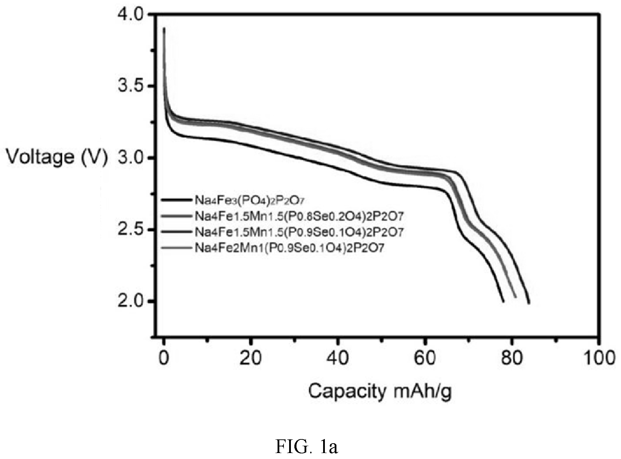

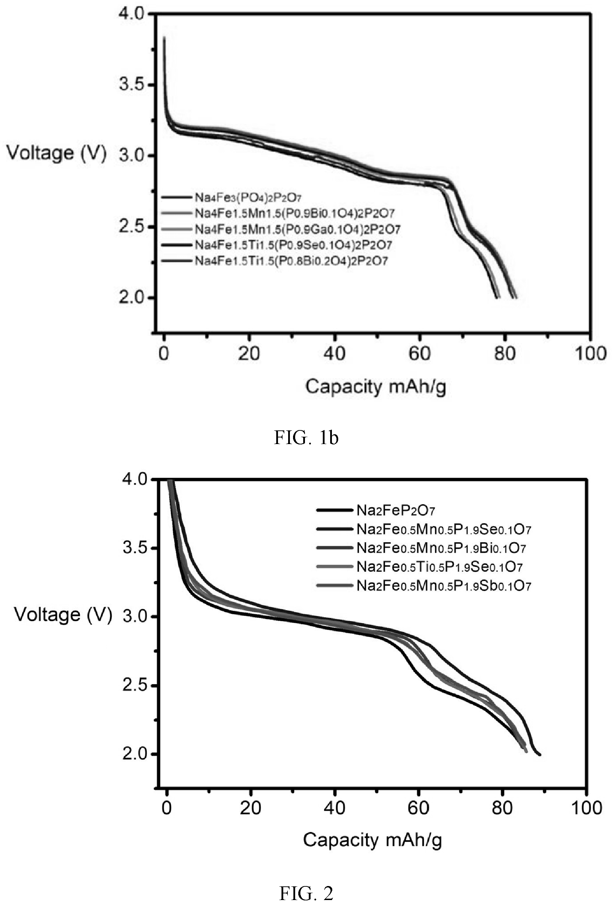

FIG. 1a and FIG. 1b show discharge voltage curves according to Comparative Example 1 and Examples 17 to 23. Some performance corresponding to a positive electrode active material obtained through double doping of Mn\Ti and Se\Bi\Ga is enhanced. For example, cycle performance, a voltage, and a capacity are improved. (Mn reduces the electronic conductivity, and Ti increases the electronic conductivity, which applies to the following two types of materials).

FIG. 2 shows discharge voltage curves according to Comparative Example 2 and Examples 24 to 27. Double doping of Mn\Ti and Bi\Se\Sb improves a discharge voltage, a capacity, and cycle performance of a positive electrode active material.

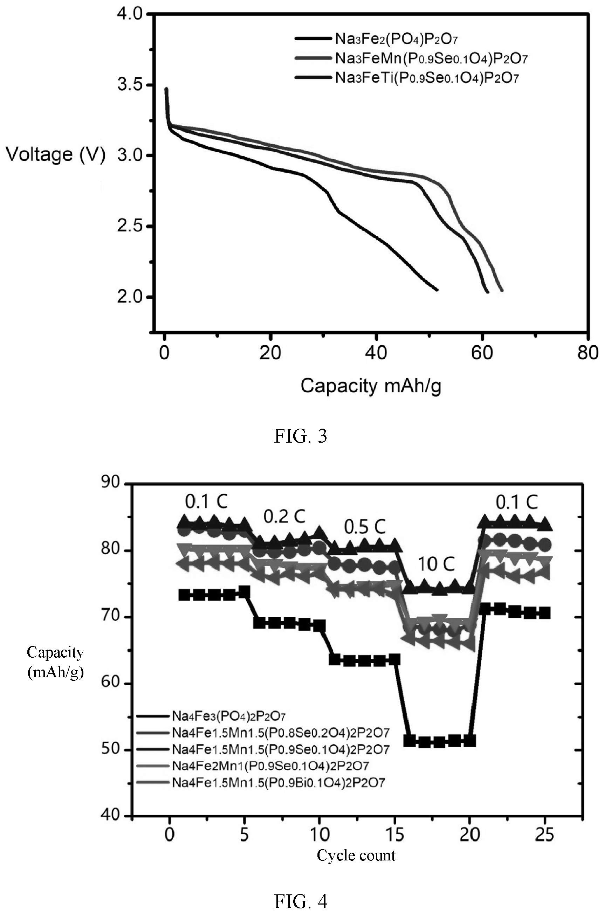

FIG. 3 shows discharge voltage curves according to Comparative Example 3 and Examples 28 and 29. Double doping of Mn\Ti and Se improves a discharge voltage, a capacity, and cycle performance of a positive electrode active material.

FIG. 4 shows rate performance results according to Comparative Example 1 and Examples 17, 18, 19, and 20. At 0.1C\0.2C\0.5C\10C, double doping greatly improves rate performance of a positive electrode active material. This is because large-sized Mn\Ti\Se\Ga expands an ion channel and lowers a sodium-ion diffusion barrier.

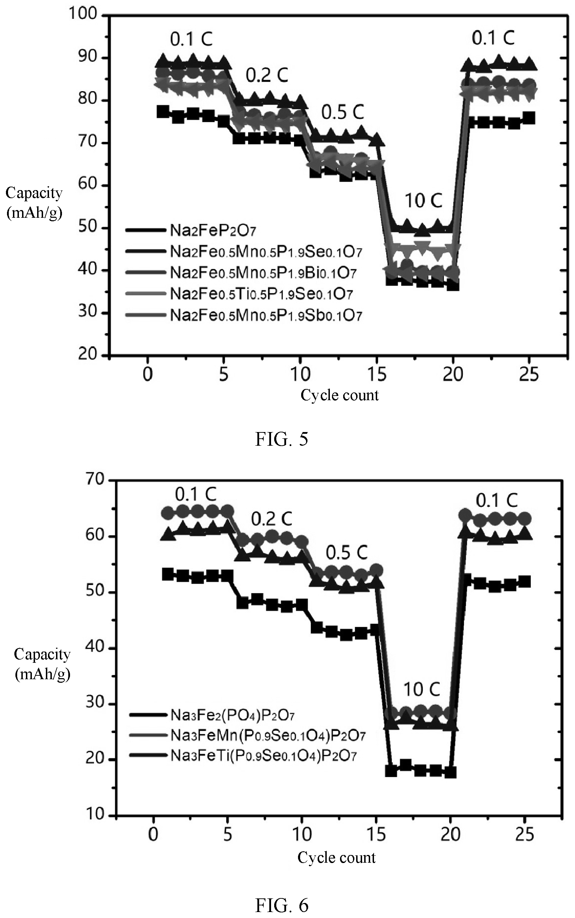

FIG. 5 shows rate performance results according to Comparative Example 2 and Examples 24, 25, 26, and 27. At 0.1C\0.2C\0.5C\10C, double doping greatly improves rate performance of a positive electrode active material.

FIG. 6 shows rate performance results according to Comparative Example 3 and Examples 28 and 29. At 0.1C\0.2C\0.5C\10C, double doping greatly improves rate performance of a positive electrode active material.

FIG. 7a, FIG. 7b, and FIG. 7c are XRD patterns of positive electrode active materials according to Example 1, Example 24, and Example 28 of the present disclosure, respectively. Molecular formulas in the corresponding examples can be obtained from main peak positions and lattice parameters of the materials obtained in Examples 1, 24, and 28 in combination with element ratio analysis of ICP. A phase purity of the material after sintering is high.

Preferred implementations of the present disclosure are described in detail above, but the present disclosure is not limited thereto. Within the technical concept scope of the present disclosure, a plurality of simple modifications may be made to the technical solutions of the present disclosure, including combinations of technical features in any other appropriate manner. These simple modifications and combinations will also be considered as content disclosed in the present disclosure, and all fall within the protection scope of the present disclosure.

## Claims

1. A positive electrode active material, having the following general formula: NaₓM_{y}(P_{1-w}A_{w}O₄)_{z}(P₂₋ᵤAᵤO₇), wherein M is selected from one or more of Fe, Ti, V, Cr, Mn, Mg, Ca, Zr, Cd, Co, Ni, Cu, Zn, and Nb; A is selected from one or more of Ga, Sb, Se, Te, Bi, and In; x satisfies a condition 2≤x≤4; y satisfies a condition 1≤y≤4; z satisfies a condition 0≤z≤2; w satisfies a condition 0<w≤0.25; and u satisfies a condition 0≤u≤0.2, wherein u and z cannot be 0 at the same time.

2. The positive electrode active material according to claim 1, wherein M is selected from one or more of Ti, Mn, Fe, Mg, and Ca, and A is selected from one or more of Ga, Bi, and Se.

3. The positive electrode active material according to claim 1 or 2, wherein M contains at least Fe and Mg or contains at least Fe and Ca, and A is selected from Ga and/or Se; and
preferably, in M, a molar ratio of Fe to Mg is 2.9-3:0.001-0.02, or a molar ratio of Fe to Ca is 2.9-3:0.001-0.02.

4. The positive electrode active material according to any one of claims 1 to 3, wherein the positive electrode active material has the following general formula: NaₓM_{y}(P_{1-w}A_{w}O₄)_{z}(P₂O₇), wherein x=4, y=3, z=2, and 0<w≤0.25; or
the positive electrode active material has the following general formula: NaₓM_{y}(P₂₋ᵤAᵤO₇), wherein x=2, y=1, and 0<u≤0.2; or
the positive electrode active material has the following general formula: NaₓM_{y}(P_{1-w}A_{w}O₄)_{z}(P₂O₇), wherein x=3, y=2, z=1, and 0<w≤0.25.

5. The positive electrode active material according to any one of claims 1 to 4, wherein performance of the positive electrode active material satisfies at least one of the following conditions: electronic conductivity is 1×10⁻⁸ to 6×10⁻⁷ S/cm, a capacity retention ratio after 1200 cycles at 1C is 82% to 97%, and a first-cycle discharge specific capacity at 0.1C is 82 to 93 mAh/g.

6. A preparation method for a positive electrode active material, comprising:
(1) mixing a metal M source material, a metal A source material, a sodium source, a phosphorus source, and a reducing agent to obtain a precursor solution; and
(2) sintering the precursor solution to obtain the positive electrode active material;
wherein M is selected from one or more of Fe, Ti, V, Cr, Mn, Mg, Ca, Zr, Cd, Co, Ni, Cu, Zn, and Nb, and A is selected from one or more of Ga, Sb, Se, Te, Bi, and In.

7. The preparation method according to claim 6, wherein the sintering specifically comprises: granulating and sintering the precursor solution to obtain the positive electrode active material;
preferably, the metal M source material is selected from one or more of metal nitrate, metal oxalate, and metal citrate;
preferably, the metal A source material is selected from one or more of metal nitrate, metal oxalate, and metal citrate;
preferably, the sodium source is selected from one or more of sodium carbonate, sodium dihydrogen phosphate, sodium acetate, and sodium nitrate;
preferably, the phosphorus source is selected from ammonium dihydrogen phosphate and/or etidronic acid; and
preferably, the reducing agent is selected from one or more of oxalic acid, citric acid, ascorbic acid, and tartaric acid.

8. The preparation method according to claim 6 or 7, wherein a temperature of the sintering is 400 to 650°C and time of the sintering is 10 to 36 h.

9. The preparation method according to any one of claims 6 to 8, wherein pre-sintering is further performed before the sintering, wherein a pre-sintering temperature is 260 to 330°C, and pre-sintering time is 1 to 5 h.

10. The preparation method according to any one of claims 6 to 9, wherein a molar ratio of the metal M source material, the metal A source material, the sodium source, the phosphorus source, and the reducing agent is (0.01-0.1):(0.0001-0.1):(0.01-0.1):(0.01-0.1):(0.01-0.1).

11. A sodium-ion battery, comprising the positive electrode active material according to any one of claims 1 to 5 or a positive electrode active material obtained using the preparation method according to any one of claims 6 to 10.

12. An electrical device, comprising the sodium-ion battery according to claim 11.
